# EUROPÄISCHE PATENTSCHRIFT

(11) **EP 2 700 748 B1**
(45) Veröffentlichungstag und Bekanntmachung des Hinweises auf die Patenterteilung: **16.03.2016**
(21) Anmeldenummer: 13181254.7
(22) Anmeldetag: 21.08.2013
(51) Int. Cl.: E01C 23/088

(54) **Selbstfahrende Fräsmaschine, sowie Verfahren zum Lenken einer selbstfahrenden Fräsmaschine**
Self-propelled milling machine, and method for steering a self-propelled milling machine
Fraiseuse automotrice et procédé de conduite d'une fraiseuse automotrice

(30) Priorität: 23.08.2012 DE 102012215005
(43) Veröffentlichungstag der Anmeldung: 26.02.2014
(73) Patentinhaber: Wirtgen GmbH, 53578 Windhagen (DE)
(72) Erfinder: Berning, Christian, 50321 Brühl (DE); Vogt, Andreas, 53567 Asbach (DE); Barimani, Cyrus, 53639 Königswinter (DE); Hähn, Günter, 53639 Königswinter (DE)
(74) Vertreter: von Kreisler Selting Werner - Partnerschaft von Patentanwälten und Rechtsanwälten mbB

(56) Entgegenhaltungen:
- EP-A1- 2 100 495
- EP-A1- 2 573 267
- EP-A2- 2 452 551
- EP-A2- 2 573 266
- DE-U1-202007 005 756

## Beschreibung

Die Erfindung betrifft eine selbstfahrende Fräsmaschine nach dem Oberbegriff des Anspruchs 1, sowie ein Verfahren zum Lenken einer selbstfahrenden Fräsmaschine nach dem Oberbegriff des Anspruchs 8.

Die selbstfahrende Fräsmaschine, insbesondere Straßenfräse oder Surface Miner, weist einen Maschinenrahmen mit einer Längsachse, ein Fahrwerk mit Rädern oder Kettenlaufwerken, die den Maschinenrahmen tragen, sowie eine Steuerung für den Fahr-, Lenk- und Fräsbetrieb und eine höhenverstellbare Arbeitswalze auf. In Fahrtrichtung der Fräsmaschine vor oder hinter der Arbeitswalze ist ein schwenkbares letztes oder einziges Transportband vorgegebener Länge angeordnet, wobei das Transportband wenigstens um eine im Wesentlichen vertikal verlaufende erste Achse seitlich unter einem Schwenkwinkel verschwenkbar ist. Eine derartige Fräsmaschine ist aus der DE 20 2007 005 756 U bekannt.

Die Fräsmaschine weist eine Steuerung für den Fahr- und Fräsbetrieb sowie eine Arbeitswalze zum Fräsen z. B. eines Straßenbelages auf. Vor oder hinter der Arbeitswalze - in Fahrtrichtung gesehen - befindet sich eine Transportbandeinrichtung mit mindestens einem Transportband. Das in Transportrichtung letzte oder einzige Transportband der Transportbandeinrichtung kann relativ zur Längsachse der Fräsmaschine seitlich unter einem vorgebbaren Schwenkwinkel nach links oder rechts verschwenkt werden und über einen vorgebbaren Höhenwinkel höhenverstellbar sein. Die Transportbandeinrichtung weist ein Abwurfende auf, an dem das Fräsgut aufgrund der Fördergeschwindigkeit und des Höhenwinkels über eine Flugbahn in Form einer Wurfparabel auf die Ladefläche eines Transportfahrzeugs abgeladen wird.

Im praktischen Betrieb einer derartigen Fräsmaschine entstehen wegen des weit auskragenden Transportbandes Probleme bei der Lenkung der Fräsmaschine während des Betriebs und beim Versetzen der Fräsmaschine an einen anderen Ort.

Beispielsweise wird bei einer Frontlader-Fräsmaschine das Fräsgut nach vorne auf das vorausfahrende Transportfahrzeug abgeworfen. Die Bedienungsperson für die Fräsmaschine muss dem Fahrzeugführer des Transportfahrzeuges signalisieren, wann sich das Transportfahrzeug weiter nach vorne bewegen soll. Dies führt zu Problemen, weil sich die Bedienungsperson im Grunde genommen auf den Fräsbetrieb konzentrieren muss und gleichzeitig eine Kollision mit dem vorausfahrenden Transportfahrzeug vermeiden muss.

Ein weiteres Problem besteht darin, dass die Bedienungsperson für die Fräsmaschine auch die Beladung der Ladefläche durch Verstellung des Schwenkwinkels, des Höhenwinkels und der Fördergeschwindigkeit des in Transportrichtung letzten oder einzigen Transportbandes der Transportbandeinrichtung übernehmen muss und dadurch von ihrer eigentlichen Aufgabe, den Fräsbetrieb durchzuführen, abgelenkt wird. Eine Korrektur des Schwenkwinkels kann beispielsweise bei einem Wechsel der Fahrtrichtung der Fräsmaschine notwendig sein.

Auch im Falle einer Hinterlader-Fräsmaschine bestehen Probleme bei der Koordination der Fräsmaschine mit dem Transportfahrzeug, zumal das Transportfahrzeug hinter der Fräsmaschine in Rückwärtsfahrt hinterherfahren muss. Für die Bedienungsperson der Fräsmaschine ergibt sich eine noch höhere Belastung, da sie einerseits den Fräsbetrieb in Vorwärtsfahrt steuern muss und andererseits die Beladung des Transportfahrzeugs in Fahrtrichtung hinter der Fräsmaschine beobachten muss, den Schwenkwinkel, den Höhenwinkel und/oder die Fördergeschwindigkeit der Transportbandeinrichtung steuern muss und dem Fahrzeugführer die notwendigen Informationen vermitteln muss.

Beim Versetzen der selbstfahrenden Fräsmaschine an einen anderen Ort muss die Bedienungsperson der Fräsmaschine darauf achten, dass das weit auskragende Transportband, insbesondere bei engen Kurvenfahrten, nicht mit seitlichen Hindernissen, wie z. B. Masten, entlang einer Fahrspur kollidiert. Das Transportband kann länger als die eigentliche Fräsmaschine sein und hat üblicherweise eine Länge von ca. 5 m bis ca. 8 m.

Aus der EP 2 100 495 A ist eine landwirtschaftliche Erntemaschine zum Aufnehmen und Bearbeiten von Erntegut, mit einer um eine horizontale und vertikale Achse verschwenkbaren Überladeeinrichtung zum Überladen von Erntegut auf ein Transportfahrzeug, wobei die Überladeeinrichtung der sich im Erntebetrieb befindenden Erntemaschine in Abhängigkeit von Betriebskriterien der Erntemaschine manuell und/oder automatisch entgegen die Fahrrichtung der Erntemaschine verschwenkt wird.

Aus der EP 2 573 266 ist ein Verfahren zur Steuerung eines Beladungsvorgangs eines Transportfahrzeugs durch eine im Fräsbetrieb befindliche Fräsvorrichtung sowie eine Straßenfräse bekannt, bei denen mit Hilfe einer Sensoreinrichtung die Lage und zum Teil auch der Füllstand des Transportbehältnisses des Transportfahrzeuges bestimmt werden kann. Dabei wird die Relativposition des Transportbehälters im Beladebereich der Fräsvorrichtung mit Hilfe einer Sensoreinrichtung erfasst, wobei zur Steuerung des Beladungsvorgangs mehrere Parameter, darunter die Fahrgeschwindigkeit der Fräsvorrichtung im Fräsbetrieb und der Seitenverstellwinkel des Förderbandes berücksichtigt wird.

Der Erfindung liegt die Aufgabe zugrunde, eine selbstfahrende Fräsmaschine, sowie ein Verfahren zum Lenken der Fräsmaschine zu schaffen, bei der die Bedienungsperson der Straßenfräsmaschine die Fräsmaschine im Fräsbetrieb oder beim Versetzen der Fräsmaschine fahren kann, ohne bei Kurvenfahrt ständig eine Korrektur des Schwenkwinkels des Transportbandes vornehmen zu müssen, und zwar unabhängig von der Fahrtrichtung der Fräsmaschine und der Anordnung des Transportbandes in Fahrtrichtung vor oder hinter der Fräsmaschine.

Zur Lösung dieser Aufgabe dienen die Merkmale der Ansprüche 1 bzw. 8.

Die Erfindung sieht in vorteilhafter Weise vor, dass die Steuerung ein Erfassungs- und Steuerungssystem aufweist das zumindest den Lenkeinschlag der Lenkungssteuerung für das Fahrwerk, oder zumindest den Lenkeinschlag der Lenkungssteuerung und die zurückgelegte Fahrstrecke oder die Fahrgeschwindigkeit erfasst, und in Abhängigkeit dieses mindestens einen Parameters den Schwenkwinkel des Transportbandes steuert. Aus dem Lenkeinschlag kann der aktuelle Krümmungsradius bei einer Kurvenfahrt ermittelt werden und aus dem aktuellen Krümmungsradius eine eventuell notwendige Anpassung des Schwenkwinkels.

Eine derartige automatische Steuerung des Schwenkwinkels ermöglicht es, dass sich die Bedienungsperson der Fräsmaschine auf den Fräsbetrieb und die Fahrt entlang einer vorgegebenen Frässpur konzentrieren kann bzw. die Fräsmaschine beliebig an einen anderen Ort versetzen kann, ohne dass eine ständige Korrektur des eingestellten Schwenkwinkels des Transportbandes erfolgen muss. Die Fräsmaschine kann auf diese Weise in Fahrtrichtung wie ein Fahrzeug mit einem gezogenen einachsigen Anhänger bewegt werden. Im Fräsbetrieb kann auf diese Weise auch erreicht werden, dass das Ende des Transportbandes oder die Abwurfstelle stets entlang der Mittellinie der gefahrenen Bahnkurve der Frässpur oder entlang einer Äquidistanten zur Mittellinie oder innerhalb einer Schleppkurve (Traktix) der selbstfahrenden Fräsmaschine gehalten wird. Die Bedienungsperson wird dadurch entlastet, dass sie sich insbesondere bei Kurvenfahrt nicht fortlaufend um eine Anpassung des Schwenkwinkels des Transportbandes kümmern muss.

Vorzugsweise ist vorgesehen, dass das Erfassungs- und Steuerungssystem den Schwenkwinkel des Transportbandes derart fortlaufend automatisch steuert, dass das schwenkbare Transportband in jeder Lenksituation bei Vorwärtsfahrt oder Rückwärtsfahrt einen Schwenkwinkel annimmt, der im Wesentlichen dem Schwenkwinkel der Längsachse eines, an die erste Achse angelenkten schwenkbaren fiktiven einachsigen Anhängers bei Vorwärtsfahrt entspricht.

Die Steuerung kann somit für das Transportband ein Schwenkverhalten bei Kurvenfahrt, und zwar sowohl bei Vorwärtsfahrt als auch bei Rückwärtsfahrt, vorgeben, das dem eines fiktiven einachsigen Anhängers bei Vorwärtsfahrt entspricht. Somit kann die Bedienungsperson die Fräsmaschine auch rückwärts fahren, ohne dass sich das Transportband wie ein Anhänger bei Rückwärtsfahrt verhält.

Nach einer Weiterbildung ist vorgesehen, dass das Erfassungs- und Steuerungssystem einen Schwenkwinkel für das schwenkbare Transportband vorgibt, der im Wesentlichen dem Schwenkwinkel der Längsachse eines an die erste Achse angelenkten schwenkbaren Anhängers bei Vorwärtsfahrt entspricht, wobei die Lage des Drehungszentrums um die Achse des fiktive Anhängers in der Längsrichtung wählbar ist.

Substituiert man gedanklich das Transportband durch einen Anhänger entsprechender Länge, so ist die Lage des Drehungszentrums des fiktiven Anhängers bei einem Anhänger mit einer einzigen Achse dort, wo die Radachse die Längsachse des Anhängers kreuzt. Mit Hilfe der Steuerung kann die Lage des Drehungszentrums vorgegeben werden, indem der Abstand des Drehungszentrums von der ersten vertikalen Achse in die Steuerung eingegeben wird.

Das Drehungszentrum kann einen Abstand von der ersten Achse im Bereich zwischen einem Drittel und der gesamten Länge des schwenkbaren Transportbandes oder der Länge bis zur Abwurfstelle aufweisen, vorzugsweise im Bereich zwischen 40 % und 60 % der gesamten Länge. Das Drehungszentrum auf einen Wert von ca. 50 % der Länge L zu setzen, ist vorteilhaft bei einem Versetzen der Fräsmaschine, da das seitliche Ausscheren des Transportbandes dann minimiert ist.

Für den Fräsbetrieb könnte auch ein davon abweichender Wert verwendet werden. Es besteht auch die Möglichkeit, dass die Bedienungsperson die Lage des Drehungszentrums während der Fahrt verändert oder auch in Abhängigkeit der Art einer Kurvenfahrt (wie z. B. Kreisverkehr oder rechtwinkliges Abbiegen).

Die Steuerung kann den vorzugebenden Schwenkwinkel auch aus dem aktuell vorgegebenen Lenkwinkel (bzw. einem über eine bestimmte Fahrstrecke gemittelten) und den konstanten geometrischen Verhältnissen berechnen, indem der aktuell gefahrene Kurvenradius aus dem Lenkwinkel berechnet wird und aus dem Kurvenradius der Schwenkwinkel des Transportbandes (als Sekante) relativ zu der Längsachse der Fräsmaschine in der kreisförmigen aktuellen Fahrspur berechnet wird.

Der Zusammenhang zwischen Kurvenradius r und Länge L des Transportbandes geht beispielsweise aus folgender Beziehung hervor:
L=₂ r sin (α/2), wobei α der Winkel zwischen den Radien ist, die auf die Enden der Länge L gerichtet sind. Der Schwenkwinkel beträgt dann α/2 in Relation zur Längsachse der Fräsmaschine. So ist eine Vorgabe eines Schwenkwinkels von α/2 mit einem Variationsbereich von bis zu ± 30 % möglich. Die Länge L kann sich auch über die Länge des Transportbandes hinaus auf die Länge des Transportbandes bis zur Auftreffstelle des Fräsgutes auf einer Ladefläche eines Transportfahrzeuges beziehen.

Vorzugsweise ist vorgesehen, dass das Erfassungs- und Steuerungssystem den Schwenkwinkel des schwenkbaren Transportbandes derart fortlaufend automatisch steuert, dass das schwenkbare Transportband in jeder Lenksituation bei Vorwärtsfahrt oder Rückwärtsfahrt einen vorgegebenen Schwenkwinkel annimmt, bei dem das Ende des Transportbandes im Wesentlichen entlang der Mittellinie oder einer Äquidistante zur Mittellinie der bereits überfahrenen oder noch zu überfahrenden Fahrspur geführt ist.

Bei einer besonders bevorzugten Weiterbildung ist vorgesehen, dass das Transportband um eine orthogonal zur ersten Achse verlaufende zweite Achse unter einem vorgegebenen Höhenwinkel verschwenkbar ist, wobei das Transportband das Fräsgut mit einer vorgegebenen Fördergeschwindigkeit auf eine Ladefläche eines Transportfahrzeugs abwirft, und das Erfassungs- und Steuerungssystem die Lage der Ladefläche und/oder des Transportbandes fortlaufend ortet, und eine fortlaufende Steuerung des Höhenwinkels des Transportbandes und/oder eine fortlaufende Geschwindigkeitssteuerung für die Fördergeschwindigkeit durchführt, um eine Auftreffstelle auf der Ladefläche stets innerhalb der Ladefläche oder zumindest entlang der Längsmittenebene der Ladefläche oder entlang der Mittellinie der bereits überfahrenen oder noch zu überfahrenden Fahrspur zu halten.

Auf diese Weise ist ein automatischer Abladevorgang realisiert, der auch bei Kurvenfahrt für eine automatische Koordination des Abladevorgangs mit der Bewegung der Fräsmaschine und des Transportfahrzeugs sorgt. Dabei ist der Schwenkwinkel der Transportbandeinrichtung in Abhängigkeit vom Lenkwinkel der selbstfahrenden Fräsmaschine gesteuert.

Vorzugsweise ist vorgesehen, dass das Erfassungs- und Steuerungssystem mindestens einen Detektor aufweist, der direkt oder indirekt den vorgegebenen Lenkeinschlag der Lenksteuerung für das Fahrwerk detektiert oder den Lenkeinschlag und die zurückgelegte Fahrstrecke oder Fahrgeschwindigkeit, sowie weitere Detektoren aufweist, die direkt oder indirekt den Schwenkwinkel und den Höhenwinkel detektieren.

Bei einem vorteilhaften Ausführungsbeispiel ist vorgesehen, dass das Erfassungs- und Steuerungssystem eine Abstandsmesseinrichtung aufweist, mit der der Abstand zu einem in Förderrichtung des Transportbandes folgenden Transportfahrzeug detektierbar ist, wobei das Erfassungs- und Steuerungssystem für den Fahrzeugführer des Transportfahrzeugs erkennbare, vorzugsweise sichtbare Start-/ Stoppsignale für das Transportfahrzeug erzeugt.

Dabei kann vorgehen sein, dass in das Erfassungs- und Steuerungssystem ein programmierbarer oder durch teach-in einlesbarer Abstandsbereich eingebbar ist, der kürzer ist als die maximale Länge der Ladefläche des jeweiligen Transportfahrzeugs, wobei in Abhängigkeit von dem gemessenen Abstand beim Verlassen des vorgegebenen Abstandsbereichs das Start- oder Stoppsignal ansteuerbar ist.

Fortbewegungs-Steuerungssignale für das Transportfahrzeug sind grundsätzlich in der DE 10 2009 041 842 A1 beschrieben.

Zur Lösung der Aufgabe dienen auch die Merkmale des Anspruchs 8.

Das erfindungsgemäße Verfahren betrifft ein Verfahren zum Lenken einer selbstfahrenden Fräsmaschine, insbesondere Straßenfräsmaschine oder Surface Miner, entlang einer vorgegebenen Fahrspur, die für den Fahr-, Lenk-, und Fräsbetrieb eine Steuerung aufweist. Die Fräsmaschine mit einer Längsachse wird von einem lenkbaren Fahrwerk mit Rädern oder Kettenlaufwerken getragen, wobei das von einer Arbeitswalze abgearbeitete Fräsgut im Fräsbetrieb mit einer in Fahrtrichtung der Fräsmaschine vor oder hinter der Fräsmaschine angeordneten Transportband abtransportiert wird. Das letzte oder einzige Transportband kann seitlich verschwenkt werden. Zumindest der Lenkeinschlag der Lenkungssteuerung für das Fahrwerk, oder zumindest der Lenkeinschlag der Lenkungssteuerung und die zurückgelegte Fahrstrecke oder die Fahrgeschwindigkeit werden erfasst und in Abhängigkeit dieses mindestens einen Parameters wird der Schwenkwinkel des Transportbandes gesteuert .

Dabei kann der Schwenkwinkel des Transportbandes derart fortlaufend automatisch gesteuert werden, dass das schwenkbare Transportband in jeder Lenksituation bei Vorwärtsfahrt oder Rückwärtsfahrt einen vorgegebenen Schwenkwinkel annimmt, der im Wesentlichen dem Schwenkwinkel der Längsachse eines, um die erste Achse schwenkbaren fiktiven Anhängers bei Vorwärtsfahrt entspricht.

Vorzugsweise ist vorgesehen, dass der Schwenkwinkel für das schwenkbare Transportband derart fortlaufend automatisch gesteuert wird, dass der vorgegebene Schwenkwinkel im Wesentlichen dem Schwenkwinkel der Längsachse eines, um die erste Achse schwenkbaren fiktiven Anhängers bei Vorwärtsfahrt entspricht, wobei die Lage des Drehungszentrums des Anhängers entlang der Längsachse des Transportbandes frei ausgewählt werden kann, um einen aktuellen Schwenkwinkel zu berechnen und einzustellen.

Es kann vorgesehen sein, dass die Ladefläche geortet wird und der Höhenwinkel und/oder die Fördergeschwindigkeit des Transportbandes derart geregelt werden, dass die Auftreffstelle auf der Ladefläche auch bei Kurvenfahrt entlang der Längsmittelebene der Ladefläche oder auf der Mittellinie der Fahrspur gehalten wird.

Weitere vorteilhafte Merkmale sind der Beschreibung zu entnehmen.

Im Folgenden werden unter Bezugnahme auf die Zeichnungen Ausführungsbeispiele der Erfindung näher erläutert.

Es zeigen:
- Fig. 1: eine Hinterlader-Straßenfräsmaschine,
- Fig. 2: eine Frontlader-Straßenfräsmaschine, und
- Fig. 3: eine schematische Darstellung der Schwenkwinkelsteuerung in Abhängigkeit von dem Lenkwinkel bei einer Straßenfräsmaschine gemäß Fig. 1.

Die nachfolgende Beschreibung bezieht sich auf selbstfahrende Fräsmaschinen, und zwar insbesondere auf Straßenfräsmaschinen, und auch auf Surface Miner.

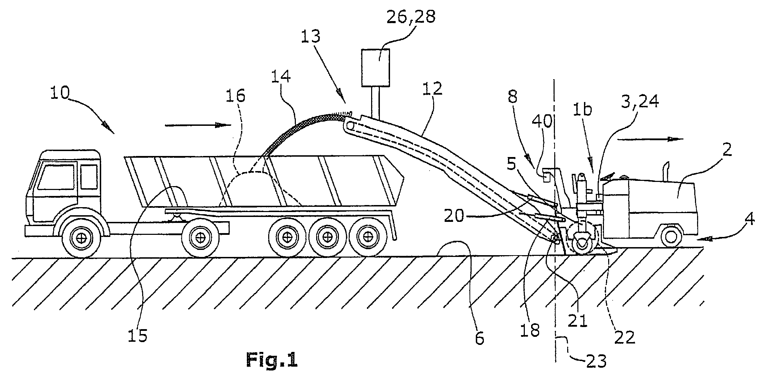

Fig. 1 zeigt das Beispiel einer Hinterlader-Fräsmaschine 1b, bei der das Transportfahrzeug 10 in Rückwärtsfahrt hinter der Fräsmaschine hinterherfährt.

Sofern seitlich neben der Fräsmaschine 1a, 1b ausreichend Platz zur Verfügung steht, kann das Transportfahrzeug 10 auch in Vorwärtsfahrt neben der Fräsmaschine 1 bewegt werden.

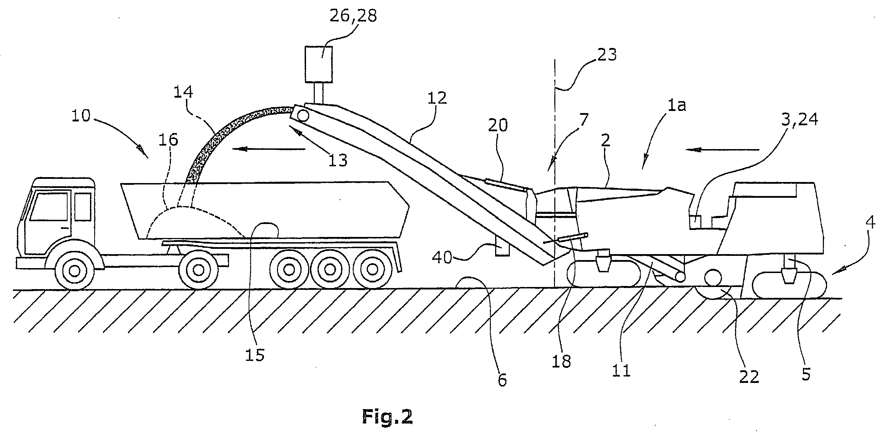

Fig. 2 zeigt eine Fräsmaschine am Beispiel einer Frontlader-Straßenfräsmaschine 1a. Die Straßenbaumaschine 1 weist einen Maschinenrahmen 2 auf, der von einem beispielsweise aus Kettenlaufwerken oder Rädern bestehenden Fahrwerk 4 getragen wird, das über mindestens drei Höhenverstelleinrichtungen in Form von Hubsäulen 5 mit dem Maschinenrahmen 2 verbunden ist. Wie aus Fig. 2 ersichtlich, sind bei dem Ausführungsbeispiel vier Hubsäulen 5 vorgesehen, mit denen der Maschinenrahmen 2 in eine vorgebbare Ebene gebracht werden kann, die vorzugsweise parallel zur Straßenoberfläche 6 verläuft, auf denen die Kettenlaufwerke des Fahrwerks 4 stehen.

Die in Fig. 2 gezeigt Straßenfräsmaschine weist eine Arbeitswalze 22 in Längsrichtung der Fräsmaschine 1a zwischen den Kettenlaufwerken des Fahrwerks 4 auf.

Die Arbeitswalze kann über die den Maschinenrahmen 2 tragenden Hubsäulen 5 oder relativ zu dem Maschinenrahmen 2 höhenverstellbar sein.

Die Fräsmaschinen 1a, 1b können Kettenlaufwerke und/oder Räder aufweisen.

Andere Bauformen einer Fräsmaschine 1b können die Arbeitswalze 22 beispielsweise auch in Höhe der hinteren Kettenlaufwerke oder Räder des Fahrwerks 4 aufweisen, wie in der Fig. 1 auch dargestellt.

Die Fräsmaschinen 1a, 1b können eine einzige lenkbare Achse als eine lenkbare Achse aufweisen, oder eine lenkbare Vorderachse in Kombination mit mindestens einem hinteren lenkbaren Rad- oder Kettenlaufwerk.

Ebenso kann eine Transportbandeinrichtung mit mindestens einem Transportband 11, 12 zum Abtransport des abgefrästen Fräsgutes am vorderen 7 oder hinteren Ende 8 der Fräsmaschine 1a, 1b angeordnet sein.

Die Fahrtrichtungen der jeweiligen Fahrzeuge sind in den Fign. 1 und 2 jeweils durch Pfeile angezeigt.

Bei dem Ausführungsbeispiel der Fig. 2 wird das von der Arbeitswalze 22 abgefräste Fräsgut über ein erstes ortsfestes Transportband 11 der Transportbandeinrichtung, die das Fräsgut 14 auf ein zweites schwenkbares Transportband 12 überträgt, auf die Ladefläche 15 des Transportfahrzeugs 10 abgeladen. Aufgrund der Geschwindigkeit des Transportbandes 12 der Transportbandeinrichtung wird das Fräsgut 14 nicht unmittelbar am Ende des Transportbandes 12 abgeladen, sondern das Fräsgut folgt einer Wurfparabel, so dass die Auftreffstelle 16 auf der Ladefläche 15 mit Abstand von dem freien Ende 13 des Transportbandes 12 befindlich ist. Das Transportband 12 kann aus einer Mittelposition heraus nach links oder nach rechts über Kolben-Zylindereinheiten 18 verschwenkt werden, um das Fräsgut 14 auch bei Kurvenfahrt bzw. bei spurversetztem Fahren des Transportfahrzeugs 10 auf die Ladefläche 15 abladen zu können oder auch um die Fräsmaschine beim Umsetzen an einen anderen Ort besser manövrieren zu können. Des Weiteren kann die Bedienungsperson der Fräsmaschine 1a, 1b den Höhenwinkel des Transportbandes 12 mit Hilfe einer Kolben-Zylindereinheit 20 einstellen. Der Höhenwinkel beeinflusst ebenso wie die Fördergeschwindigkeit des Transportbandes 12, die Wurfparabel des Fräsgutes 14 und die Position der Auftreffstelle 16.

Der aktuell eingestellte Höhenwinkel um eine horizontale Achse 21 bzw. Schwenkwinkel um eine vertikale Achse 23 sowie der aktuelle Lenkwinkel wird an ein Erfassungs- und Steuerungssystem 24 gemeldet, das des Weiteren mindestens einen Detektor 26 aufweisen kann, der die Lage der Ladefläche 15 und/oder des in Transportrichtung letzten oder einzigen Transportbandes 12 der Transportbandeinrichtung fortlaufend detektiert. Dieser Detektor 26 kann entweder an der Fräsmaschine 1a, 1b an dem dem Transportband 12 zugewandten Ende oder an dem freien Ende 13 des Transportbandes 12 angeordnet sein.

Das Erfassungs- und Steuerungssystem 24 kann in die von der Bedienungsperson betätigte Steuerung 3 für den Fahr-, Lenk- und Fräsbetrieb integriert sein oder mit dieser zumindest verbunden sein, um ggf. auch Daten über die Fahrgeschwindigkeit, die zurückgelegte Fahrstrecke und/oder einen detektierten Lenkwinkel der Fräsmaschine 1a, 1b und die Fördergeschwindigkeit des Transportbandes 12 zu erhalten.

Die Steuerung 3 weist ein Erfassungs- und Steuerungssystem 24 auf, das den Lenkeinschlag der Lenksteuerung für das Fahrwerk erfasst und in Abhängigkeit dieses Parameters den Schwenkwinkel des Transportbandes 12 automatisch steuert.

Alternativ können der Lenkeinschlag der Lenkungssteuerung und die zurückgelegte Fahrstrecke erfasst werden und in Abhängigkeit dieser Parameter der Schwenkwinkel des Transportbandes 12 automatisch gesteuert werden. Durch das zusätzliche Erfassen der zurückgelegten Fahrstrecke lassen sich zu starke Änderungen des Schwenkwinkels bei schnellen Änderungen des Lenkwinkels vermeiden. Es kann auch alternativ die Fahrgeschwindigkeit detektiert werden und die zurückgelegte Fahrstrecke aus der Fahrgeschwindigkeit berechnet werden.

Eine weitere Möglichkeit besteht darin, eine Änderung des Schwenkwinkels entsprechend dem Lenkwinkel erst dann vorzunehmen, wenn eine Mindestgeschwindigkeit überschritten ist.

Der Schwenkwinkel des Transportbandes 12 folgt demzufolge dem aktuell eingestellten oder dem durchschnittlich über eine bestimmte zurückgelegte Fahrstrecke eingestellten Lenkeinschlag, der beispielsweise dadurch erfasst werden kann, dass der aktuelle Lenkwinkel z. B. an den Rädern oder Kettenlaufwerken der vorderen Achse des Fahrwerks permanent erfasst wird oder direkt von der Lenksteuerung übernommen wird.

Dabei kann das Erfassungs- und Steuerungssystem 24 den Schwenkwinkel des Transportbandes 12 derart fortlaufend automatisch steuern, dass das schwenkbare Transportband 12 in jeder Lenksituation bei Vorwärts- oder Rückwärtsfahrt einen von der Steuerung berechneten und vorgegebenen Schwenkwinkel annimmt.

Die Folge davon ist, dass die Bedienungsperson der Fräsmaschine sich nicht darum kümmern muss, den Schwenkwinkel des Transportbandes bei Kurvenfahrt, sei es im Fräsbetrieb oder beim Versetzen der Maschine an einen anderen Ort, ständig zu beobachten und bei Bedarf anzupassen. Vielmehr wird durch die automatische Steuerung des Schwenkwinkels zuverlässig erreicht, dass sich das Transportband 12 im Wesentlichen wie ein nachlaufender Anhänger an der Fräsmaschine bei Vorwärtsfahrt verhält. Dabei ist angenommen, dass ein solcher fiktiver Anhänger um die erste Schwenkachse 23 verschwenkbar ist und der Schwenkwinkel, den der Anhänger bei einer Kurvenfahrt in Vorwärtsrichtung annehmen würde, wird sowohl für die Vorwärtsfahrt als auch für die Rückwärtsfahrt als einzustellender vorgegebener Schwenkwinkel für das Transportband 12 verwendet.

Der fiktive Anhänger ist mit einer Radachse versehen, die ein Drehungszentrum bildet. Zur Berechnung des Schwenkwinkels durch die Steuerung 3 bzw. das Erfassungs- und Steuerungssystem 24 kann die Lage des Drehungszentrums frei gewählt werden, und zwar vorzugsweise im Bereich zwischen einem Drittel und der gesamten Länge des schwenkbaren Transportbandes 12, oder zwischen einem Drittel und der gesamten Länge bis zur Auftreffstelle 16 auf einer Ladefläche 15 des Transportfahrzeugs. Bei einem bevorzugten Ausführungsbeispiel kann das Erfassungs- und Steuerungssystem 24 den Schwenkwinkel des Transportbandes 12 derart fortlaufend automatisch steuern, dass das schwenkbare Transportband 12 in jeder Lenksituation bei Vorwärts- oder Rückwärtsfahrt einen Schwenkwinkel annimmt, bei dem das Ende des Transportbandes 12 oder auch alternativ die Auftreffstelle 16 auf der Ladefläche 15 im Wesentlichen entlang der Mittellinie 34 der bereits überfahrenen oder noch zu überfahrenden Fahrspur 32 geführt ist.

Nach einer weiteren Alternative kann das Ende des Transportbandes 12 auch entlang einer Äquidistanten zur Mittellinie 34 der bereits überfahrenen oder noch zu überfahrenden Fahrspur 32 geführt sein, nämlich dann, wenn ein Transportfahrzeug 10 neben der Fahrspur 32 bewegt wird.

Desweiteren kann das Erfassungs- und Steuerungssystem 24 eine Abstandmesseinrichtung 40 aufweisen, mit der der Abstand zu einem in Förderrichtung des Transportbandes 12 folgenden Transportfahrzeug 10 detektierbar ist. Dabei kann das Erfassungs- und Steuerungssystem 24 für den Fahrzeugführer des Transportfahrzeugs 10 erkennbare, vorzugsweise sichtbare Start-/Stoppsignale erzeugen.

In das Erfassung- und Steuerungssystem 24 kann ein programmierbarer oder durch teach-in einlesbarer Abstandsbereich eingebbar sein, der kürzer ist als die maximale Länge der Ladefläche 15 des jeweiligen Transportfahrzeugs 10. Beim Verlassen des vorgegebenen Abstandsbereichs kann in Abhängigkeit von dem gemessenen Abstand das Start- oder Stoppsignal angezeigt werden.

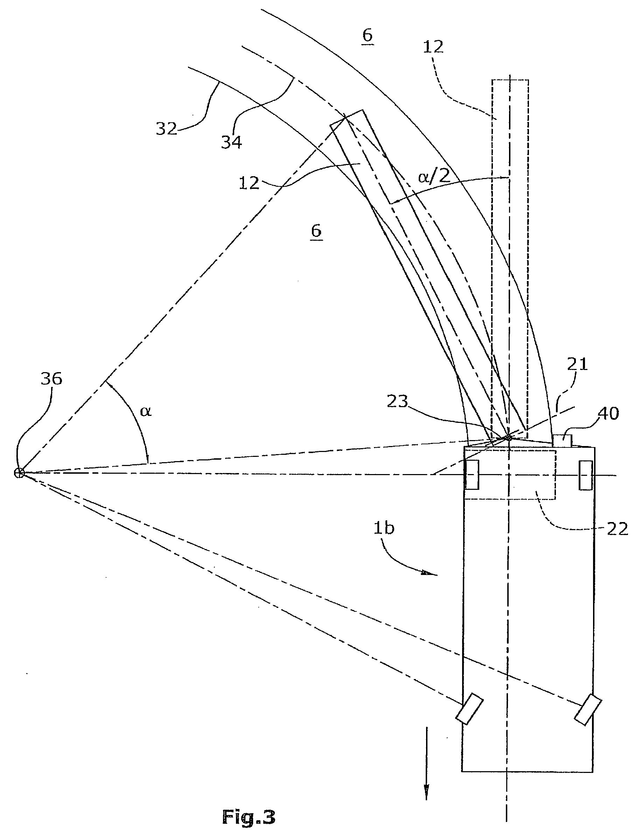

Fig. 3 zeigt eine Fräsmaschine 1b gemäß Fig. 1 bei Kurvenfahrt entlang einer Mittellinie 34 einer Fahrspur 32. Bei Geradeausfahrt nimmt das Transportband 12 die gestrichelt dargestellte Position ein. Es versteht sich, dass wenn ausgehend von einer derartigen Geradeausfahrt eine Kurvenfahrt um ein Drehungszentrum 36 eingeleitet wird, das Transportband 12 ohne eine Schwenkwinkelsteuerung weit ausscheren würde und dabei einerseits bei einem Versetzen der Fräsmaschine mit Hindernissen, z. B. Masten oder Ampelanlagen, am Straßenrand kollidieren könnte, oder im Fräsbetrieb nicht auf eine gewünschte Auftreffstelle 16 auf der Ladefläche 15 eines Transportfahrzeugs abladen könnte, wenn der Schwenkwinkel nicht korrigiert würde.

Das Transportband 12 mit ausgezogener Linie zeigt die Situation bei einer automatischen Schwenkwinkelsteuerung, bei der das freie Ende des Transportbandes 12 entlang der Mittellinie 34 geführt ist. Die Berechnung des Schwenkwinkels durch die Steuerung 3 kann allerdings auch so erfolgen, dass das freie Ende des Transportbandes 12 auch einer Äquidistanten zur Mittellinie 34 der Fahrspur 32 folgen kann, um beispielsweise ein neben der Fahrspur 32 fahrendes Transportfahrzeug 10 beladen zu können.

Das Erfassung- und Steuerungssystem 24 kann auch die veränderliche Lage der Ladefläche 15 des Transportfahrzeugs 10 und des in Transportrichtung letzten oder einzigen Transportbandes 12 der Transportbandeinrichtung relativ zum Maschinenrahmen 2 orten und die Positionierung der Auftreffstelle 16 des Fräsgutes 14 über den Höhenwinkel und/oder die Fördergeschwindigkeit der Transportbandeinrichtung fortlaufend und automatisch steuern, so dass das abgeworfene Fräsgut 14 zumindest innerhalb der Ladefläche 15 auftrifft. Alternativ kann auch die veränderliche Lage der Ladefläche 15 des Transportfahrzeugs 10 relativ zu dem in Transportrichtung letzten oder einzigen Transportband 12 fortlaufend geortet werden, um die Steuerung durchzuführen.

Das Erfassungs- und Steuerungssystem 24 kann die Lage der Ladefläche 15 und/oder des in Transportrichtung letzten oder einzigen Transportbandes 12 fortlaufend mit Hilfe eines Bildaufnahmesystems 28 oder eines nicht optischen elektronischen Ortungssystems erfassen, das Daten zur Lagebestimmung der Ladefläche 15 in Relation zu dem Maschinenrahmen 2 oder zu dem in Transportrichtung letzten oder einzigen Transportbandes 12 liefert. Die Informationen des Bildaufnahmesystems 28 kann durch für sich bekannte Bildanalysemethoden ausgewertet werden. Ein Beispiel für ein nicht optisches elektronisches Ortungssystems ist ein Radiofrequenz-Identifikationssystem (RFID), das zusätzlich noch die Möglichkeit der Identifikation einer bestimmten Ladefläche 15 eines bestimmten Transportfahrzeugs 10 ermöglicht.

Bei der Lokalisierung der Ladefläche 15 mit RFID können stationäre RFID-Tags an dem Transportfahrzeug 10 insbesondere an der Ladefläche 15 verwendet werden.

Bei einer Lokalisierung mit Bluetooth-Sensorknoten als weiteres nicht optisches Lokalisierungsverfahren werden im Raum verteilte Sensorknoten als Markierungen verwendet und die Signalfeldstärke, die abhängig von der Entfernung ist, gemessen.

Selbstverständlich besteht auch die Möglichkeit, unterschiedliche Lokalisierungsverfahren in Kombination zu verwenden.

Generell kann mit optischen und quasi-optischen (Funk-) Messmethoden für Länge und Winkel, sowie mit verschiedenen Zeitmessverfahren für Zeitdifferenzen und Laufzeitdifferenzen gearbeitet werden.

Auch die Abstandsmessung kann mit obigen Messverfahren realisiert werden, oder aber mit konventionellen Messverfahren, wie z. B. mittels Ultraschall.

Die Soll-Lagedaten können durch ein Teach-in-Verfahren ermittelt werden, indem die Positionen der Fahrzeuge 1a, 1b, 10 entsprechend realistischen Situationen variiert werden und die jeweils hierfür notwendigen Parameter, nämlich Höhenwinkel und Fördergeschwindigkeit des Transportbandes 12 gespeichert werden. In gleicher Weise kann auch ein Beladungsprogramm erstellt werden. Dabei können auch Variationen der Steuerung, die z. B. durch Kurvenfahrt entstehen, berücksichtigt werden. Die durch den Lesevorgang eingelesenen Daten können dabei auch unterscheiden, ob das Transportfahrzeug 10 links oder rechts neben der Frässpur 32 fährt oder in der Frässpur 32 der Fräsmaschine 1a, 1b.

## Patentansprüche

1. Selbstfahrende Fräsmaschine (1a, 1b), insbesondere Straßenfräse oder Surface Miner,
- mit einem Maschinenrahmen (2) mit einer Längsachse,
- mit einem Fahrwerk mit Rädern oder Kettenlaufwerken, die den Maschinenrahmen (2) tragen,
- mit einer Steuerung (3) für den Fahr-, Lenk- und Fräsbetrieb,
- mit einer höhenverstellbaren Arbeitswalze (22),
- mit einem in Fahrtrichtung der Fräsmaschine (1a, 1b) vor oder hinter der Arbeitswalze (22) angeordneten schwenkbaren letzten oder einzigen Transportband (12) vorgegebener Länge,
- wobei das Transportband (12) wenigstens um eine im Wesentlichen vertikal verlaufende erste Achse (23) seitlich unter einem Schwenkwinkel verschwenkbar ist,
**dadurch gekennzeichnet, dass**
die Steuerung (3) ein Erfassungs- und Steuerungssystem (24) aufweist,
das zumindest den Lenkeinschlag der Lenkungssteuerung für das Fahrwerk, oder zumindest den Lenkeinschlag der Lenkungssteuerung und die zurückgelegte Fahrstrecke oder den Lenkeinschlag der Lenkungssteuerung und die Fahrgeschwindigkeit erfasst und in Abhängigkeit dieses mindestens einen Parameters oder Parametersatzes den Schwenkwinkel des Transportbandes (12) steuert.

2. Vorrichtung nach Anspruch 1, **dadurch gekennzeichnet, dass** das Erfassungs- und Steuerungssystem den Schwenkwinkel des Transportbandes (12) derart fortlaufend automatisch steuert, dass das schwenkbare Transportband (12) in jeder Lenksituation bei Vorwärtsfahrt oder Rückwärtsfahrt einen Schwenkwinkel annimmt, der im Wesentlichen dem Schwenkwinkel der Längsachse eines, an die erste Achse (23) angelenkten schwenkbaren fiktiven einachsigen Anhängers bei Vorwärtsfahrt entspricht.

3. Vorrichtung nach Anspruch 1 oder 2, **dadurch gekennzeichnet, dass** das Erfassungs- und Steuerungssystem einen Schwenkwinkel für das schwenkbare Transportband (12) vorgibt, der im Wesentlichen dem Schwenkwinkel der Längsachse eines an die erste Achse (23) angelenkten fiktiven Anhängers bei Vorwärtsfahrt entspricht, wobei die Lage des Drehungszentrums um die Achse des fiktiven Anhängers in der Längsrichtung wählbar ist.

4. Vorrichtung nach Anspruch 3, **dadurch gekennzeichnet, dass** das Drehungszentrum einen Abstand von der ersten Achse (23) im Bereich zwischen einem Drittel und der gesamten Länge des schwenkbaren Transportbandes (12) oder der Länge bis zur Abwurfstelle (16) aufweist, vorzugsweise im Bereich zwischen 40% und 60 % der gesamten Länge.

5. Vorrichtung nach einem der Ansprüche 1 bis 4, **dadurch gekennzeichnet, dass** das Erfassungs- und Steuerungssystem den Schwenkwinkel des schwenkbaren Transportbandes (12) derart fortlaufend automatisch steuert, dass das schwenkbare Transportband (12) in jeder Lenksituation bei Vorwärtsfahrt oder Rückwärtsfahrt einen vorgegebenen Schwenkwinkel annimmt, bei dem das Ende des Transportbandes (12) im Wesentlichen entlang der Mittellinie (34) oder entlang einer Äquidistanten zur Mittellinie (34) der bereits überfahrenen oder noch zu überfahrenden Fahrspur (32) geführt ist.

6. Vorrichtung nach einem der Ansprüche 1 bis 5, **dadurch gekennzeichnet, dass** das Transportband (12) um eine orthogonal zur ersten Achse (23) verlaufende zweite Achse (21) unter einem vorgegebenen Höhenwinkel verschwenkbar ist,
wobei das Transportband (12) das Fräsgut (14) mit einer vorgegebenen Fördergeschwindigkeit auf eine Ladefläche (15) eines Transportfahrzeugs (10) abwirft, und
das Erfassungs- und Steuerungssystem (24) die Lage der Ladefläche (15) und/oder des Transportbandes (12) fortlaufend ortet, und eine fortlaufende Steuerung des Höhenwinkels des Transportbandes (12) und/oder eine fortlaufende Geschwindigkeitssteuerung für die Fördergeschwindigkeit durchführt, um eine Auftreffstelle (16) auf der Ladefläche (15) stets innerhalb der Ladefläche (15) oder zumindest entlang der Längsmittenebene der Ladefläche (15) oder entlang der Mittellinie (34) in der Mitte der bereits überfahrenen oder noch zu überfahrenden Fahrspur (32) zu halten.

7. Vorrichtung nach einem der Ansprüche 1 bis 6, **dadurch gekennzeichnet, dass** das Erfassungs- und Steuerungssystem (24) mindestens einen Detektor aufweist, der direkt oder indirekt den vorgegebenen Lenkeinschlag der Lenksteuerung für das Fahrwerk detektiert, oder den Lenkeinschlag und die zurückgelegte Fahrstrecke oder die Fahrgeschwindigkeit sowie weitere Detektoren aufweist, die direkt oder indirekt den aktuellen Schwenkwinkel und den Höhenwinkel detektieren.

8. Verfahren zum Lenken einer selbstfahrenden Fräsmaschine (1a, 1b), insbesondere Straßenfräsmaschine oder Surface Miner, entlang einer vorgegebenen Fahrspur, bei dem
- der Fahr-, Lenk-, und Fräsbetrieb von einer Steuerung (3) gesteuert wird,
- die Fräsmaschine (1a, 1b) von einem lenkbaren Fahrwerk mit Rädern oder Kettenlaufwerken getragen wird,
- das von einer Arbeitswalze (22) im Fräsbetrieb abgearbeitete Fräsgut (14) mit einem in Fahrtrichtung der Fräsmaschine (1a, 1b) vor oder hinter der Fräsmaschine (1a, 1b) angeordneten Transportband (12) abtransportiert wird, und
- wobei ein letztes oder einziges Transportband (12) wenigstens seitlich um eine in Wesentlichen vertical verlaufende erste Achse (23) unter einem Schwenkwinkel verschwenkt werden kann,
**dadurch gekennzeichnet, dass**
zumindest der Lenkeinschlag der Lenkungssteuerung für das Fahrwerk, oder zumindest der Lenkeinschlag der Lenkungssteuerung und die zurückgelegte Fahrstrecke oder der Lenkeinschlag der Lenkungssteuerung und die Fahrgeschwindigkeit erfasst werden und in Abhängigkeit dieses mindestens einen Parameters oder Parametersatzes der Schwenkwinkel des Transportbandes (12) gesteuert wird.

9. Verfahren nach Anspruch 8, **dadurch gekennzeichnet, dass** der Schwenkwinkel des Transportbandes (12) derart fortlaufend automatisch gesteuert wird, dass das schwenkbare Transportband (12) in jeder Lenksituation bei Vorwärtsfahrt oder Rückwärtsfahrt einen Schwenkwinkel annimmt, der im Wesentlichen dem Schwenkwinkel der Längsachse eines, an die erste Achse (23) angelenkten schwenkbaren fiktiven einachsigen Anhängers bei Vorwärtsfahrt entspricht.

10. Verfahren nach Anspruch 8 oder 9, **dadurch gekennzeichnet, dass** der Schwenkwinkel für das schwenkbare Transportband (12) derart fortlaufend automatisch gesteuert wird, dass der vorgegebene Schwenkwinkel im Wesentlichen dem Schwenkwinkel der Längsachse eines, an der ersten Achse (23) schwenkbaren fiktiven Anhängers bei Vorwärtsfahrt entspricht, wobei die Lage des Drehungszentrums des fiktiven Anhängers entlang der Längsachse des Transportbandes frei ausgewählt werden kann, um den aktuellen Schwenkwinkel zu berechnen und einzustellen.

11. Verfahren nach einem der Ansprüche 8 bis 10, **dadurch gekennzeichnet, dass** der Schwenkwinkel des schwenkbaren Transportbandes (12) derart fortlaufend automatisch gesteuert wird, dass das schwenkbare Transportband (12) in jeder Lenksituation bei Vorwärtsfahrt oder Rückwärtsfahrt einen vorgegebenen Schwenkwinkel annimmt, bei dem das Ende des Transportbandes (12) im Wesentlichen entlang der Mittellinie (34) oder entlang einer Äquidistanten zur Mittellinie (34) der bereits überfahrenen oder noch zu überfahrenden Fahrspur (32) geführt wird.

12. Verfahren nach einem der Ansprüche 8 bis 11, **dadurch gekennzeichnet, dass** das Fräsgut (14) auf eine Ladefläche (15) eines Transportfahrzeugs (10) um eine orthogonal zur ersten Achse (23) verlaufende zweite Achse (21) unter einem vorgegebenen Höhenwinkel mit einer vorgegebenen Fördergeschwindigkeit abgeworfen wird und der Höhenwinkel und/oder die Fördergeschwindigkeit des Transportbandes (12) fortlaufend automatisch derart gesteuert werden, dass das Fräsgut (14) innerhalb der Ladefläche (15) oder zumindest entlang einer Längsmittenebene der Ladefläche (15) oder entlang der Mittellinie (34) der bereits überfahrenen oder noch zu überfahrenden Fahrspur (32) abgeworfen wird.

13. Verfahren nach Anspruch 12, **dadurch gekennzeichnet, dass** die Ladefläche (15) geortet wird und der Höhenwinkel und/oder die Fördergeschwindigkeit des Transportbandes (12) derart geregelt werden, dass die Auftreffstelle (16) auf der Ladefläche (15) auch bei Kurvenfahrt entlang der Längsmittelebene der Ladefläche (15) oder auf der Mittellinie (34) der Fahrspur (32) gehalten wird.

14. Verfahren nach einem der Ansprüche 8 bis 13, **dadurch gekennzeichnet, dass** der Abstand zu einem in Förderrichtung des Transportbandes (12) folgenden Transportfahrzeug (10) detektiert wird, wobei in Abhängigkeit von dem Abstandssignal für den Fahrzeugführer des Transportfahrzeugs (10) erkennbare, vorzugsweise sichtbare Start-/ Stoppsignale für das Transportfahrzeug (10) erzeugt werden.

15. Verfahren nach Anspruch 14, **dadurch gekennzeichnet, dass** ein programmierbarer oder durch teach-in einlesbarer Abstandsbereich eingegeben wird, der kürzer ist als die maximale Länge einer Ladefläche (15) des jeweiligen Transportfahrzeugs (10), wobei in Abhängigkeit von dem gemessenen Abstand beim Verlassen des vorgegebenen Abstandsbereichs das Start- oder Stoppsignal angesteuert wird.

## Claims

1. Automotive milling machine (1a,1b), in particular road milling machine or surface miner,
- with a machine frame (2) having a longitudinal axis,
- with a chassis having wheels or crawler track units supporting the machine frame (2),
- with a controller (3) for the travelling, steering and milling operation,
- with a height-adjustable working drum (22),
- with a slewable last or single transport conveyor (12) of specified length arranged in front of or behind the working drum (22) as seen in the direction of travel of the milling machine (1a,1b),
- the transport conveyor (12) being, as a minimum, slewable sideways about an substantially vertical first axis (23) under a slewing angle,
**characterized in that**
the controller (3) comprises a detection and control system (24) which, as a minimum, detects the steering angle of the steering controller for the chassis or, as a minimum, the steering angle of the steering controller and the distance travelled or the steering angle of the steering controller and the travel speed, and controls the slewing angle of the transport conveyor (12) in accordance with this at least one parameter or set of parameters.

2. Device in accordance with claim 1, **characterized in that** the detection and control system continuously controls the slewing angle of the transport conveyor (12) automatically in such a way that the slewable transport conveyor (12) assumes a slewing angle in each steering situation during forward travel or reverse travel which substantially corresponds to the slewing angle of the longitudinal axis of a slewable fictitious single-axle trailer articulated at the first axis (23) when in forward travel.

3. Device in accordance with claim 1 or 2, **characterized in that** the detection and control system specifies a slewing angle for the slewable transport conveyor (12) which substantially corresponds to the slewing angle of the longitudinal axis of a fictitious trailer articulated at the first axis (23) when in forward travel, the position of the centre of rotation about the axis of the fictitious trailer being selectable in longitudinal direction.

4. Device in accordance with claim 3, **characterized in that** the centre of rotation exhibits a distance from the first axis (23) ranging between one third and the entire length of the slewable transport conveyor (12) or the length up to the point of discharge (16), preferably ranging between 40% and 60% of the entire length.

5. Device in accordance with any one of the claims 1 to 4, **characterized in that** the detection and control system continuously controls the slewing angle of the slewable transport conveyor (12) automatically in such a way that the slewable transport conveyor (12) assumes a specified slewing angle in each steering situation during forward travel or reverse travel in which the end of the transport conveyor (12) is substantially guided along the centre line (34) or along an equidistant to the centre line (34) of the track (32) previously travelled over or yet to be travelled over.

6. Device in accordance with any one of the claims 1 to 5, **characterized in that** the transport conveyor (12) is slewable about a second axis (21) orthogonal to the first axis (23) under a specified elevation angle,
wherein the transport conveyor (12) discharges the milled material (14) at a specified conveying speed onto a loading surface (15) of a transport vehicle (10), and
the detection and control system (24) continuously locates the position of the loading surface (15) and/or of the transport conveyor (12) and performs a continuous control of the elevation angle of the transport conveyor (12) and/or a continuous speed control of the conveying speed in order to always maintain a point of impingement (16) on the loading surface (15) within said loading surface (15) or, as a minimum, along the longitudinal median plane of the loading surface (15) or along the centre line (34) in the centre of the track (32) previously travelled over or yet to be travelled over.

7. Device in accordance with any one of the claims 1 to 6, **characterized in that** the detection and control system (24) comprises at least one detector which directly or indirectly detects the specified steering angle of the steering controller for the chassis, or the steering angle and the distance travelled or the travel speed, and comprises additional detectors which directly or indirectly detect the current slewing angle and elevation angle.

8. Method for steering an automotive milling machine (1a,1b), in particular road milling machine or surface miner, along a specified track, where
- the travelling, steering and milling operation is controlled by a controller (3),
- the milling machine (1a,1b) is supported by a steerable chassis with wheels or crawler track units,
- the milled material (14) removed by a working drum (22) in the milling operation is transported away by a transport conveyor (12) arranged in front of or behind the milling machine (1a,1b) as seen in the direction of travel of the milling machine (1a,1b), and
- wherein a last or single transport conveyor (12) can, as a minimum, be slewed sideways at a slewing angle about a first axis (23) extending substantially vertically,
**characterized in that**
as a minimum, the steering angle of the steering controller for the chassis or, as a minimum, the steering angle of the steering controller and the distance travelled or the steering angle of the steering controller and the travel speed are detected, and the slewing angle of the transport conveyor (12) is controlled in accordance with at least this one parameter or set of parameters.

9. Method in accordance with claim 8, **characterized in that** the slewing angle of the transport conveyor (12) is continuously controlled automatically in such a way that the slewable transport conveyor (12) assumes a slewing angle in each steering situation during forward travel or reverse travel which essentially corresponds to the slewing angle of the longitudinal axis of a slewable fictitious single-axle trailer articulated at the first axis (23) when in forward travel.

10. Method in accordance with claim 8 or 9, **characterized in that** the slewing angle of the slewable transport conveyor (12) is continuously controlled automatically in such a way that the specified slewing angle substantially corresponds to the slewing angle of the longitudinal axis of a slewable fictitious trailer articulated at the first axis (23) when in forward travel, wherein the position of the centre of rotation of the fictitious trailer along the longitudinal axis of the transport conveyor can be selected freely in order to compute and to adjust the current slewing angle.

11. Method in accordance with any one of the claims 8 to 10, **characterized in that** the slewing angle of the slewable transport conveyor (12) is continuously controlled automatically in such a way that the slewable transport conveyor (12) assumes a specified slewing angle in each steering situation during forward travel or reverse travel in which the end of the transport conveyor (12) is essentially guided along the centre line (34) or along an equidistant to the centre line (34) of the track (32) previously travelled over or yet to be travelled over.

12. Method in accordance with any one of the claims 8 to 11, **characterized in that** the milled material (14) is discharged onto a loading surface (15) of a transport vehicle (10) about a second axis (21) orthogonal to the first axis (23) under a specified elevation angle at a specified conveying speed, and the elevation angle and/or the conveying speed of the transport conveyor (12) are continuously controlled automatically in such a way that the milled material (14) is discharged within the loading surface (15) or, as a minimum, along a longitudinal median plane of the loading surface (15) or along the centre line (34) of the track (32) previously travelled over or yet to be travelled over.

13. Method in accordance with claim 12, **characterized in that** the loading surface (15) is located and the elevation angle and/or the conveying speed of the transport conveyor (12) are regulated in such a way that the point of impingement (16) on the loading surface (15) is maintained along the longitudinal median plane of the loading surface (15) or on the centre line (34) of the track (32) even when cornering.

14. Method in accordance with any one of the claims 8 to 13, **characterized in that** the distance to a transport vehicle (10) following in the conveying direction of the transport conveyor (12) is detected, in which arrangement start/stop signals for the transport vehicle (10) are generated in accordance with the distance signal which are discernible by, preferably visible to the vehicle driver of the transport vehicle (10).

15. Method in accordance with claim 14, **characterized in that** a distance range programmable or importable by means of teach-in is entered which is shorter than the maximum length of a loading surface (15) of the respective transport vehicle (10), with the start or stop signal being controlled in accordance with the distance measured when leaving the specified distance range.

## Revendications

1. Fraiseuse automotrice (1a, 1b), en particulier engin de fraisage routier ou engin pour mine à ciel ouvert, comprenant
- un châssis (2) ayant un axe longitudinal,
- un mécanisme de roulement équipé de roues ou de chenilles, qui supportent le châssis (2),
- un dispositif de commande (3) destiné à la conduite, à la direction et au fraisage,
- un rouleau de travail (22) réglable en hauteur,
- une dernière ou unique bande transporteuse pivotante (12) de longueur prédéterminée disposée en amont ou en aval du rouleau de travail (22) par référence au sens de roulement de la fraiseuse (1a, 1b),
- la bande transporteuse (12) pouvant pivoter latéralement avec un angle de pivotement au moins autour d'un premier axe (23) orienté sensiblement verticalement,
**caractérisé en ce que**
le dispositif de commande (3) comprend un système de détection et de commande (24) qui détecte au moins l'angle de direction de la commande de direction du mécanisme de roulement, ou au moins l'angle de direction de la commande de direction et la distance parcourue ou l'angle de direction de la commande de direction et la vitesse de roulement et qui commande l'angle de pivotement de la bande transporteuse (12) en fonction de cet au moins un paramètre ou ensemble de paramètres.

2. Dispositif selon la revendication 1, **caractérisé en ce que** le système de détection et de commande commande automatiquement en continu l'angle de pivotement de la bande transporteuse (12) de telle sorte que la bande transporteuse pivotante (12) occupe dans chaque situation de direction pour marche avant ou arrière un angle de pivotement qui correspond en marche avant sensiblement à l'angle de pivotement de l'axe longitudinal d'une remorque fictive pivotante à un seul essieu qui est articulée au niveau d'un premier axe (23).

3. Dispositif selon la revendication 1 ou 2, **caractérisé en ce que** le système de détection et de commande définit un angle de pivotement de la bande transporteuse pivotante (12) qui correspond en marche avant sensiblement à l'angle de pivotement de l'axe longitudinal d'une remorque fictive articulée au niveau du premier axe (23), la position du centre de rotation autour de l'axe de la remorque fictive dans direction longitudinale pouvant être choisie.

4. Dispositif selon la revendication 3, **caractérisé en ce que** le centre de rotation se trouve à une distance du premier axe (23) dans la gamme comprise entre un tiers et la longueur totale de la bande transporteuse pivotante (12) ou de la longueur jusqu'au point de décharge (16), de préférence dans la gamme comprise entre 40% et 60% de la longueur totale.

5. Dispositif selon l'une des revendications 1 à 4, **caractérisé en ce que** le système de détection et de commande commande automatiquement en continu l'angle de pivotement de la bande transporteuse pivotante (12) de telle sorte que la bande transporteuse pivotante (12) occupe dans chaque situation de direction en marche avant ou arrière un angle de pivotement prédéterminé pour lequel l'extrémité de la bande transporteuse (12) est guidée sensiblement le long de la ligne médiane (34) ou à équidistance de la ligne médiane (34) du chemin de roulement (32) déjà parcouru ou encore à parcourir.

6. Dispositif selon l'une des revendications 1 à 5, **caractérisé en ce que** la bande transporteuse (12) est apte à pivoter avec un angle de hauteur prédéterminé autour d'un second axe (21) orthogonal au premier axe (23),
la bande transporteuse (12) déchargeant le matériau fraisé (14) à une vitesse de transport prédéterminée sur une surface de chargement (15) d'un véhicule de transport (10), et
le système de détection et de commande (24) détectant en continu la position de la surface de chargement (15) et/ou de la bande transporteuse (12), et effectuant une commande en continu de l'angle de hauteur de la bande transporteuse (12) et/ou une commande en continu de la vitesse de transport pour maintenir un point d'impact (16) sur la surface de chargement (15) toujours à l'intérieur de la zone de chargement (15) ou au moins le long du plan médian longitudinal de la surface de chargement (15) ou le long de la ligne médiane (34) au milieu du chemin de roulement (32) déjà parcouru ou encore à parcourir.

7. Dispositif selon l'une des revendications 1 à 6, **caractérisé en ce que** le système de détection et de commande (24) comprend au moins un détecteur qui détecte directement ou indirectement l'angle de direction prédéterminé de la commande de direction du mécanisme de roulement ou l'angle de direction et la distance parcourue ou la vitesse de roulement et d'autres détecteurs qui détectent directement ou indirectement l'angle de pivotement actuel et l'angle de hauteur.

8. Procédé de direction d'une fraiseuse automotrice (1a, 1b), et en particulier un engin de fraisage routier ou engin pour mine à ciel ouvert, le long d'un chemin de roulement prédéterminé, dans lequel
- le roulement, la direction, et le fraisage sont commandés par un dispositif de commande (3),
- la fraiseuse (1a, 1b) est supportée par un mécanisme de roulement orientable à roues ou à chenilles,
- le matériau fraisé (14) retiré par un rouleau de travail (22) pendant le fraisage est transporté par une bande transporteuse (12) disposée en amont ou en aval de la fraiseuse (1a, 1b) par référence au sens de roulement de la fraiseuse (1a, 1b), et
- une dernière ou unique bande transporteuse (12) pouvant être pivotée au moins latéralement avec un angle de pivotement autour d'un premier axe (23) orienté sensiblement verticalement,
**caractérisé en ce que**
au moins l'angle de direction de la commande de direction du mécanisme de roulement, ou au moins l'angle de direction de la commande de direction et la distance parcourue ou l'angle de direction de la commande de direction et la vitesse de roulement sont détectés et l'angle de pivotement de la bande transporteuse (12) est commandé en fonction de cet au moins un paramètre ou ensemble de paramètres.

9. Procédé selon la revendication 8, **caractérisé en ce que** l'angle de pivotement de la bande transporteuse (12) est commandé automatiquement en continu, **en ce que** la bande transporteuse pivotante (12) occupe dans chaque situation de direction en marche avant ou arrière un angle de pivotement qui correspond en marche avant sensiblement à l'angle de pivotement de l'axe longitudinal d'une remorque fictive pivotante à un seul essieu articulée au niveau du premier axe (23).

10. Procédé selon la revendication 8 ou 9, **caractérisé en ce que** l'angle de pivotement de la bande transporteuse pivotante (12) est commandé automatiquement en continu, **en ce que** l'angle de pivotement prédéterminé correspondant en marche avant sensiblement à l'angle de pivotement de l'axe longitudinal d'une remorque fictive pivotante sur le premier axe (23), la position du centre de rotation de la remorque fictive le long de l'axe longitudinal de la bande transporteuse pouvant être choisi librement pour calculer et ajuster l'angle de pivotement.

11. Procédé selon l'une des revendications 8 à 10, **caractérisé en ce que** l'angle de pivotement de la bande transporteuse pivotante (12) est commandé automatiquement en continu, **en ce que** la bande transporteuse pivotante (12) occupe dans chaque situation de direction en marche avant ou arrière un angle de pivotement prédéterminé pour lequel l'extrémité de la bande transporteuse (12) est guidée sensiblement le long de la ligne médiane (34) ou à équidistance de la ligne médiane (34) du chemin de roulement (32) parcouru ou à parcourir.

12. Procédé selon l'une des revendications 8 à 11, **caractérisé en ce que** le matériau fraisé (14) est déchargé sur une surface de chargement (15) d'un véhicule de transport (10) à une vitesse de transport prédéterminée et à un angle de hauteur prédéterminé autour d'un second axe (21) orthogonal au premier axe (23) et l'angle de hauteur et/ou la vitesse de transport de la bande transporteuse (12) sont commandés automatiquement en continu de telle sorte que le matériau fraisé (14) est déchargé dans la surface de chargement (15) ou au moins le long d'un plan médian longitudinal de la surface de chargement (15) ou le long de la ligne médiane (34) du chemin de roulement (32) déjà parcouru ou à parcourir.

13. Procédé selon la revendication 12, **caractérisé en ce que** la surface de chargement (15) est détectée et l'angle de hauteur et/ou la vitesse de transport de la bande transporteuse (12) peuvent être régulés de telle sorte que le point d'impact (16) sur la surface de chargement (15) est conservé également dans une marche en courbe le long du plan médian longitudinal de la surface de chargement (15) ou sur la ligne médiane (34) du chemin de roulement (32).

14. Procédé selon l'une des revendications 8 à 13, **caractérisé en ce que** la distance par rapport à un véhicule de transport (10) en arrière par référence à la direction de transport de la bande transporteuse (12) est détectée, des signaux de démarrage/d'arrêt du véhicule de transport (10), de préférence visibles, reconnaissable par le conducteur du véhicule de transport (10), étant générés en fonction du signal de distance.

15. Procédé selon la revendication 14, **caractérisé en ce que** l'on entre une zone de distance, programmable ou lisible par apprentissage, qui est plus courte que la longueur maximale d'une surface de chargement (15) du véhicule de transport (10) respectif, le signal de démarrage ou d'arrêt étant déclenché en fonction de la distance mesurée lorsque l'on sorte de la zone de distance prédéterminée.
